# EUROPÄISCHE PATENTSCHRIFT

(11) **EP 3 605 648 B1**
(45) Veröffentlichungstag und Bekanntmachung des Hinweises auf die Patenterteilung: **10.04.2024**
(21) Anmeldenummer: 19189524.2
(22) Anmeldetag: 01.08.2019
(51) Int. Cl.: B60L 53/80, B60L 50/64, B60L 53/67, H01M 50/209, H01M 50/249, H01M 50/55, H01M 50/553, H01M 50/514

(54) **BATTERIEN UND EIN GEEIGNETES SCHNELL-WECHSELSYSTEM DER BATTERIEN FÜR FAHRZEUGE**
BATTERIES AND A SUITABLE QUICK CHANGE SYSTEM FOR BATTERIES FOR VEHICLES
BATTERIES ET SYSTÈME APPROPRIÉ DE CHANGEMENT RAPIDE DE BATTERIES POUR VÉHICULE

(30) Priorität: 03.08.2018 DE 102018118945
(43) Veröffentlichungstag der Anmeldung: 05.02.2020
(73) Patentinhaber: Deutsche Telekom AG, 53113 Bonn (DE)
(72) Erfinder: Huber, Michael, 67434 Neustadt a. d. W. (DE); Radomski, Sabine, 04420 Markranstädt (DE)
(74) Vertreter: Braun-Dullaeus Pannen Emmerling Patent- & Rechtsanwaltspartnerschaft mbB

(56) Entgegenhaltungen:
- EP-A1- 2 385 349
- DE-A1-102013 203 097
- JP-A- H05 159 768
- US-A1- 2012 299 531
- US-B1- 9 187 004

## Beschreibung

Die vorliegende Erfindung betrifft das technische Gebiet der elektrischen Mobilität von Fahrzeugen, insbesondere von Autos und Lastkraftwagen. Die Erfindung gibt ein Batteriesystem, ein Verfahren zum automatisierten Wechsel bzw. Unterstützung des Wechsels von Batterie-Austauschmodulen sowie eine Verwendung einer Kommunikationsplattform zum Wechseln von Batterien für Fahrzeuge an.

Eine der Motivationen für Elektroautos sind die Betrugsszenarien vieler Auto-Hersteller von Verbrennungsmotoren im Zuge des Dieselskandals, wobei die Unternehmen die Abgaswerte manipuliert haben und die Luft, insbesondere in den Städten, nachhaltig verschlechtern. Eine weitere Motivation ist natürlich die Endlichkeit fossiler Brennstoffe. Deswegen wird das Konzept der e-Mobilität als eine Zukunftstechnologie dargestellt, welche Fahrzeuge mit Verbrennungsmotor mittel bis langfristig komplett ablösen werden. Die Angebote der Fahrzeug-Hersteller an reinen e-Autos, als Autos ohne zusätzlichen Verbrennungsmotor, sind jedoch zurzeit noch überschaubar. Um dem e-Mobilität-Trend zu folgen, investieren viele Fahrzeug-Hersteller massiv Ressourcen in die Entwicklung von e-Autos und den dafür notwendigen Komponenten.

Aus dem Stand der Technik ist bekannt, dass die Batterie, also der wiederaufladbare Akkumulator, eine Schlüsselkomponente des e-Autos ist, die als Energieträger die bisherigen fossilen Treibstoffe ersetzen muss. Die Batterie des e-Autos ist auch der Teil, welcher einer echten Alltagstauglichkeit in einem breiten Einsatzspektrum aus verschiedenen Gründen noch im Wege steht. Die zurzeit verwendeten Batterien sind extrem schwer und haben eine geringe Energiedichte (Wh/kg). Mit der Lithium-Ionen-Technologie sind e-Autos mit Batterien von ca. 100 - 150 Wh/kg Energiedichte auf dem Markt. Es wird angenommen, dass für die Lithium-Ionen-Technologie Energiedichten von bis zu 300 Wh/Kg möglich ist.

Mit der heutigen Technologie hat der aktuelle e-Golf ein Batteriegewicht von 345 kg bei einer Kapazität von 35,8 kWh, mit diesen Werten sind ca. 300 km Reichweite möglich. Ein Tesla S weist ein Batteriegewicht von ca. 700 kg, eine Kapazität von ca. 90 kWh und eine Reichweite von ca. 600 km auf.

Betrachtet man die technologischen Möglichkeiten der Lithium-Ionen-Batterien, so ist in wenigen Jahren ein e-Golf mit ca. 800 km Reichweite bei gleichem Batteriegewicht von 345 kg möglich. Wahrscheinlich ist auch, dass der technologische Fortschritt in der Batterieentwicklung zu einer Reduzierung der Batteriegewichte führen wird. Da jedes kg an Batteriegewicht beim Fahren mitbewegt werden muss und dadurch unnötige zusätzliche Energie verbraucht wird, ist es zudem wünschenswert das Gesamtgewicht der Batterien im Auto zu reduzieren. Die Optimierung dieser beiden Parameter Reichweite und Batteriegewicht könnte beispielsweise bei einem e-Golf zu einem Batteriegewicht von ca. 250 kg (75 kWh) mit einer Reichweite von ca. 600 km führen. Die Problematik der Reichweite eines e-Autos mit geladenen Batterien wird sich mit der technologischen Entwicklung in den nächsten Jahren also lösen, da eine Reichweite von 600 km der aktuellen Reichweite mit fossilen Brennstoffen ähnelt.

Als signifikantes Problem verbleibt jedoch das Aufladen der leeren Batterien der Fahrzeuge. Es gibt zwar vereinzelt Schnellladestationen, die in 30-45 Minuten leere Batterien aufladen können, jedoch verkürzt diese Schnellladung etwas die Lebenszeit der Batterie und das Stromnetz ist gegenwärtig und auch in naher Zukunft nicht für einen derart hohen Stromfluss ausgelegt, wie er für eine Vielzahl von Schnellladestationen vonnöten wäre. Eine elektrische Tankstelle die gleichzeitig zehn e-Autos mit je einer 75kWh-Batterie in 30 Min. schnellladen soll, braucht eine Netzanbindung von 1,5 MW. Dieses Beispiel lässt sich beliebig bis herunter zum Privathaushalt fortsetzen. Die heutige Netzinfrastruktur ist für solche Anwendungsfälle nicht ausgebaut, d.h. dieses Infrastrukturproblem wird erst langfristig zu lösen sein. Und selbst wenn das Stromnetz dies leisten könnte, würde die Ladedauer von 30-45 Minuten bei Schnellladestationen entlang von Autobahnen zu einem signifikanten Rückstau beim Tankvorgang führen.

In der Praxis wird der Ladevorgang bisher wie folgt ausgeführt:
- Laden "Zuhause": Besitzer von Fahrzeugen laden die entladene Autobatterie zu Hause über eine Zeitdauer von mehreren Stunden, insbesondere über Nacht, auf. Aufgrund der gängigen Stromanbindungen von Haushalten wird eine Schnellladung generell nicht möglich sein. Gerade in Städten ist dieses Konzept zudem nur schlecht realisierbar, da die wenigsten Autobesitzer über eigene Stellplätze mit einem Stromanschluss verfügen.

- Laden "Unterwegs" an einer Schnellladestation: Wie zuvor beschrieben ist die Verfügbarkeit der notwendigen Infrastruktur in absehbarer Zeit zumindest kritisch, wobei selbst im Falle der notwendigen Infrastruktur die Wartezeiten während der Ladung der Batterie verbleiben, welche deutlich über die Ladezeiten einer herkömmlichen Benzintankfüllung hinausgehen, sodass es zu einem signifikanten Rückstau der Autos kommen wird.
- US 2017/0259675 A1 lehrt, dass die Batterie eines Fahrzeugs als einstückiges Bauteil mittels einer Hebebühne getauscht werden kann.
- DE 10 2013 203097 A1 zeigt eine Batteriezelle mit einem Gehäuse, bei dem auf zwei einander gegenüberliegenden Seitenflächen Terminals angeordnet sind, bereitgestellt, wobei die Terminals Kontaktflächen aufweisen, die entweder als Steckelement oder als Aufnahme oder nur als Aufnahme, in die zur Ausbildung eines Steckelements jeweils ein Zwischenelement einbringbar ist, ausgebildet sind, und wobei auf einer Seitenfläche ein Terminal und auf der zweiten Seitenfläche ein gegenpoliges Terminal angeordnet ist oder wobei auf einer Seitenfläche zwei gegenpolige Terminals und auf der zweiten Seitenfläche ebenfalls zwei gegenpolige Terminals angeordnet sind.
- JP H05 159768 A offenbart ein Batteriemodul für ein Fahrzeug, dass mehrere quaderförmige Batterieelemente umfasst, welche sich an Kontaktflächen mechanisch berühren.

Nachteilig wird bei dem obigen Stand der Technik kein einfaches und flexibles Wechselsystem zu einem Austausch von Batterien für Elektrofahrzeuge bereitgestellt.

Es ist somit die Aufgabe der Erfindung eine einfache und flexible Möglichkeit zum Austausch von Batterien für Elektrofahrzeuge anzugeben.

Diese Aufgabe wird durch die unabhängigen Ansprüche gelöst.

Erfindungsgemäß ist ein Batteriesystem zum Betreiben eines elektrischen Motors von Fahrzeugen, insbesondere von PKWs und/oder LKWs, angegeben. Das Batteriesystem umfasst zumindest ein Batterie-Austauschmodul, das in einen ersten Aufnahmeraum einer vorgegebenen Länge des Fahrzeugs wechselbar eingebracht ist und den elektrischen Motor mit Strom versorgt. Das Batterie-Austauschmodul weist Batterieelemente auf, die elektrisch zu dem Batterie-Austauschmodul gekoppelt sind, wobei jedes der Batterieelemente einen elektrischen Kontakt und eine elektrische Kontaktaufnahme mit jeweils einer ersten und einer zweiten Stromleitung aufweist.

Der Kern der Erfindung liegt nun darin, dass die Batterieelemente mechanisch an ihren jeweiligen Stirnflächen gegeneinander anliegen und eine Steckverbindung ausbilden. Die Batterieelemente weisen jeweils eine Einheitsgröße oder ein Vielfaches dieser Einheitsgröße auf, sodass sie zu der vorgegebenen Länge kombinierbar sind. Der elektrische Kontakt eines ersten Batterieelements ist in die elektrische Kontaktaufnahme eines zweiten Batterieelements eingebracht, wobei das erste und das zweite Batterieelement zumindest abschnittsweise die Steckverbindung ausbilden. Die mechanisch gekoppelten Batterieelemente sind elektrisch in Reihe oder parallel geschaltet.

Indem der elektrische Kontakt des ersten Batterieelements in die elektrische Kontaktaufnahme des zweiten Batterieelements eingebracht ist, wird erreicht, dass die Batterieelemente möglichst effizient und schnell gewechselt werden können. Es ist also insbesondere kein weiterer Arbeitsschritt notwendig, um die einzelnen Batterieelemente zu elektrisch zu verbinden, die diese lediglich einfach ineinandergesteckt werden müssen. Dies ermöglicht eine platzsparende Bauweise der Batterieelemente und schützt zudem die empfindlichen elektrischen Kontaktaufnahmen, da diese im Gebrauchszustand jeweils geschützt in einer der elektrischen Kontaktaufnahme eines anderen Batterieelements aufgenommen sind. Da jedes einzelne Batterieelement auf diese Weise ausgebildet ist, können diese beliebig untereinander ausgetauscht werden. Besonders vorteilhaft ist es, wenn zudem der Aufnahmeraum entsprechende elektrische Kontaktaufnahmen zum Schließen des Stromkreises aufweist. Das Batterie-Austauschmodul kann dann einfach in die entsprechenden elektrischen Kontaktaufnahmen des Aufnahmeraums eingeschoben werden und bildet ebenfalls abschnittsweise eine Steckverbindung aus, die den Stromkreis ohne einen weiteren Arbeitsschritt schließt. Dieser Aufbau ist insbesondere für ein automatisiertes Wechseln des Batterie-Austauschmoduls vorteilhaft.

Können sowohl das erste Batterieelement als auch das zweite Batterieelement jeweils für sich alleine die für den Elektromotor notwendige Betriebsspannung bereitstellen, so werden das erste Batterieelement und das zweite Batterieelement parallel geschaltet. Reicht hingegen die von dem ersten Batterieelement und von dem zweiten Batterieelement bereitgestellte Spannung nicht aus, um die Betriebsspannung für den Elektromotor zu erreichen, so können diese in Reihe geschaltet werden, um die Gesamtspannung zu erhöhen. Ein anschauliches Beispiel hierbei ist, dass sowohl das erste Batterieelement als auch das zweite Batterieelement jeweils nur die halbe Betriebsspannung bereitstellen können, sodass eine Reihenschaltung der beiden Batterieelemente eine Gesamtspannung ergibt, die der Betriebsspannung entspricht. Insbesondere wird hierdurch ermöglicht, dass eine Mehrzahl von Batterieelementen, die im Allgemeinen verschiedene Ausgangsspannungen bereitstellen können, auf intelligente Weise miteinander kombiniert werden können. Eine intelligente elektronische Steuerung des Fahrzeugs regelt, welche Batterieelemente miteinander in Reihe bzw. parallel geschaltet werden, um die gewünschte Betriebsspannung zu erreichen. Hieraus kann folgen, dass beispielsweise mehrere Batterieelemente zu einer ersten Gruppe in Reihe zusammengeschaltet werden, um die gewünschte Betriebsspannung bereitzustellen. Eine solche Gruppe von in Reihe geschalteten Batterieelementen, kann dann mittels der intelligenten elektronischen Steuerung mit einer weiteren Gruppe, die ebenfalls die gewünschte Betriebsspannung bereitstellt, parallel geschaltet werden.

Vorteilhaft ist es mittels des Batterie-Austauschmoduls nunmehr flexibel möglich, die Anforderungen von unterschiedlichen Fahrzeugen zu berücksichtigen. Ein kleines Stadtauto, beispielsweise ein Smart, benötigt deutlich weniger Batteriekapazität als ein großer SUV. Für beide Fahrzeuge kann das erfindungsgemäße Batterie-Austauschmodul verwendet werden, indem dieses durch die Batterieelemente variabel an die gewünschte Batteriekapazität angepasst wird, insbesondere können die ersten Aufnahmeräume in den Autos eine unterschiedliche Größe aufweisen, die aber jeweils ein Vielfaches der Einheitsgröße ist. Dadurch, dass nun über alle Fahrzeugklassen hinweg ein einheitliches standardisiertes Batterie-Austauschmodul verwendet werden kann, ist es ökonomisch deutlich einfacher eine flächendeckende Verfügbarkeit der Batterie-Austauschmodule zu gewährleisten. Wechselstationen müssen nun nicht mehr für jeden Hersteller oder jeden Autotyp ein spezifisches Batterie-Austauschmodul bereithalten, sondern können eine Vielzahl von Fahrzeugen mit identischen Modulen versorgen, wodurch Engpässe vermieden werden. Wird eine höhere Kapazität/Akkuleistung benötigt, so ist der erste Aufnahmeraum des Fahrzeugs entsprechend größer dimensioniert, sodass eine höhere Anzahl der Batterieelemente zu dem Batterie-Austauschmodul zusammengesteckt werden können. Beispielsweise könnten bei dem kleinen Stadtauto zwei Batterieelemente und bei dem SUV sechs Batterieelemente das Batterie-Austauschmodul ausbilden.

Vorteilhaft wird durch die Steckverbindung ein leichtes und schnelles Austauschen des gesamten Batterie-Austauschmoduls oder auch nur einzelner Batterieelemente ermöglicht. Vorzugsweise sind die Batterieelemente in einer Art standardisiert, dass diese von verschiedenen Herstellern gebaut werden können und trotzdem miteinander kompatibel sind. Hier ist es insbesondere wichtig, die Steckverbindung an der gleichen Stelle vorzusehen und von den Abmessungen entsprechend auszugestalten.

Die Einheitsgröße gewährleistet vorteilhaft, dass beispielsweise ein Batterieelement, das die zweifache Einheitsgröße aufweist, einfach durch zwei Batterieelemente mit der Einheitsgröße ersetzt werden kann. Ein anderes Batterieelement mit der dreifachen Einheitsgröße kann ebenso durch drei Batterieelemente der Einheitsgröße oder ein Batterieelement der Einheitsgröße und ein Batterieelement der zweifachen Einheitsgröße ersetzt werden. Hierdurch wird also ermöglicht, dass der erste Aufnahmeraum des Fahrzeugs für das Batterie-Austauschmodul immer vollständig auffüllbar ist. Ist zweckmäßigerweise an den gegenüberliegenden Enden des Aufnahmeraums jeweils ein elektrisch leitender Abschnitt, insbesondere einmal in der Form eines Steckers und einmal in der Form einer Buchse, ausgebildet, so stellt das vorstehend beschriebene Merkmal sicher, dass eine leitende Verbindung zwischen dem Batterie-Austauschmodul und dem Fahrzeug hergestellt wird.

Erfindungsgemäß sind die jeweiligen ersten Stromleitungen und die jeweiligen zweiten Stromleitungen der Batterieelemente elektrisch miteinander verbunden und bilden eine elektrische Parallelschaltung oder eine Reihenschaltung aus. Die Parallelschaltung ist für Batterieelemente vorgesehen, die die notwendige Betriebsspannung des Elektromotors bereitstellen können und kann beispielsweise dadurch realisiert werden, dass an den Batterieelementen jeweils ein elektrisch leitendes Bauteil in der Form eines T-Stücks zum Abgreifen der Spannung vorgesehen ist, über das die einzelnen Batterieelemente verbunden sind. Dies ermöglicht, dass die Kapazitäten der Batterien zu einer Parallelschaltung kombiniert werden können und die Batterieelemente zugleich in modular effizienter Weise hintereinander seriell angeordnet sind. Für den elektrischen Motor des Fahrzeugs ist eine Parallelschaltung deshalb vorteilhaft, da dieser dann mit einer gleich bleibenden elektrischen Spannung betrieben werden kann. Die Batterieelemente, die die notwendige Betriebsspannung des Elektromotors nicht bereitstellen können, werden über eine Reihenschaltung verbunden. In den Batterieelementen selbst Z sind entsprechende Schaltungen vorgesehen, sodass die Batterieelemente durch die intelligente Steuerung des Fahrzeugs wahlweise parallel oder in Reihe geschaltet werden können. Hierzu können entsprechende Schalter vorgesehen sein, mit denen der eine oder der andere elektrische Kreislauf an- bzw. ausgeschaltet werden kann. Bevorzugt ist die Steckverbindung durch einen mechanischen Druck zusammengehalten. Dieser mechanische Druck kann beispielsweise durch ein Federsystem erzeugt werden, wodurch zum einen die Batterieelemente sicher in ihrer jeweiligen Steckverbindung gehalten werden und zugleich eine einfache Möglichkeit zur Auswechslung der Batterieelemente geschaffen ist, wenn der mechanische Druck gelöst wird.

Vorzugsweise sind die Batterieelemente jeweils mit einer Schutzhülle umgeben, wobei der Stecker und die Buchse an dieser Schutzhülle ausgebildet sind und eine leitende Verbindung zu dem Batterieelement im Inneren der Schutzhülle herstellen. Die Schutzhülle kann beispielsweise 2-teilig aus einem harten Kunststoff gefertigt sein, die geöffnet werden kann, um das Batterieelement zu entnehmen und bei einer Fehlfunktion gegebenenfalls auszutauschen. Die Schutzhülle kann so ausgebildet sein, dass sie auch ohne ein inneres Batterieelement elektrisch leitend zwischen zwei andere Batterieelemente in das Modul aufgenommen sein kann. Auf diese Weise kann das Gewicht des Batterie-Austauschmoduls verringert werden, wenn die maximale Kapazität nicht benötigt wird, da das Auto beispielsweise vorwiegend im Stadtverkehr bewegt wird und auch über Nacht zu Hause aufgeladen werden kann. Ist es dann vorgesehen, mit dem Fahrzeug eine längere Strecke zu fahren, können in die leeren Schutzhüllen wieder Batterieelemente eingesetzt werden bzw. die leeren Schutzhüllen ausgetauscht werden. Bei dem Verwenden von leeren Schutzhüllen sollte vorzugsweise auf eine gleichmäßige Gewichtsverteilung des Batterie-Austauschmoduls innerhalb des Fahrzeugs geachtet werden.

In einer vorteilhaften Ausgestaltung weisen die Batterieelemente bzw. die sie umgebenden Schutzhüllen, jeweils die geometrische Form eines Quaders auf, wobei der Stecker und die Buchse auf gegenüberliegenden Seiten des Quaders der Schutzhülle bzw. der Batterieelemente vorgesehen sind. Hierdurch ist ein besonders effizienter und platzsparender modularer Aufbau des Batterie-Austauschmoduls möglich. Neue Batterieelemente können flexibel an das Ende von anderen Batterieelementen eingesteckt werden.

In einer vorteilhaften Ausgestaltung der Erfindung weist das Fahrzeug einen zweiten Aufnahmeraum für ein Hand-Batteriemodul auf, das weniger als das Batterie-Austauschmodul wiegt. Das Hand-Batteriemodul wird von zumindest einem der Batterieelemente mit der Einheitsgröße ausgebildet. Auf vorteilhafte Weise ist hierdurch eine Möglichkeit geschaffen, die Batterieelemente auch händisch auszutauschen, da ein Hand-Batteriemodul mit einem Gewicht von ca. 10-20 kg vorgesehen ist, wodurch (je nach Auto) eine Reichweite von ca. 50 km zur Verfügung gestellt wird. Das Batterie-Austauschmodul ist nämlich im Normalfall deutlich zu schwer und zu unhandlich als dass dieses rein manuell ohne zusätzliche Unterstützungswerkzeuge ausgetauscht werden könnte. Geht einem elektrischen Fahrzeug allerdings die Energie aus bevor eine elektrische Tankstelle erreicht wurde, verbleibt bis dato nur die Möglichkeit, dieses Auto abzuschleppen. Nunmehr ist es möglich, dass beispielsweise ein ADAC Pannendienst oder auch andere Fahrer ein Hand-Batteriemodul in ihrem Auto mitführen und das liegengebliebene Auto hierdurch mit Strom versorgen zu können. Handelte es sich bei den Batterieelementen sowie den Hand-Batteriemodulen um Mietobjekte, ist ein einfacher unproblematischer Austausch möglich, ohne dass für den anderen Autofahrer, der "sein" Hand-Batteriemodul zur Verfügung stellt, nennenswerte Kosten entstehen würden. Eine flächendeckende Versorgung mit elektrischer Energie für Fahrzeuge kann hierdurch gewährleistet werden, indem ein dezentrales Netz von Hand-Batteriemodulen geschaffen wird. Das Batterie-Austauschmodule sowie das Hand-Batteriemodule können von der Steuerung des Fahrzeugs gezielt angesteuert und individuell entladen werden, sodass der Fahrer entscheiden kann, ob er mit der Energie der Hand-Batteriemodule oder der Batterie-Austauschmodule oder Teilen davon den elektrischen Motor des Fahrzeugs betreiben möchte.

Gemäß einem weiteren Aspekt der Erfindung ist ein Verfahren zum Wechsel eines Batterie-Austauschmodul mit einem Batteriesystem nach einem der vorhergegangenen Merkmale angegeben. Hierzu wird ein geladenes Batterie-Austauschmodul, dass modular zumindest zwei Batterieelemente aufweist, die mittels einer Steckverbindung verbunden sind, zum Wechsel bereitgehalten, wobei eine Ladevorrichtung dem ersten Aufnahmeraum zunächst ein entladenes Batterie-Austauschmodul entnimmt und danach das geladene Batterie-Austauschmodul einbringt. Erfindungsgemäß ist, vorzugsweise an der Seite des Fahrzeugs, an der Öffnung des ersten Aufnahmeraums ein Förderband vorgesehen auf dem das entladene Batterie-Austauschmodul abtransportiert und das geladene Batterie-Austauschmodul angeliefert wird. Dies ermöglicht ein ähnlich schnelles und komfortables Tanken wie bei konventionellen Tankstellen mit fossilen Treibstoffen. Das Fahrzeug wird einfach an einer dafür vorgesehenen Stelle neben dem Förderband geparkt und der gesamte Wechselvorgang des Batterie-Austauschmodul kann auf automatisierte Weise durchgeführt werden. Das Fahrzeug kann im Vorfeld über eine Kommunikationsverbindung mit der elektrischen Tankstelle kommunizieren, sodass ein den Anforderungen des Fahrzeugs entsprechendes Batterie-Austauschmodul korrekt konfiguriert bereitgestellt werden kann, sobald das Fahrzeug an der elektrischen Tankstelle eintrifft. Vorzugsweise kann der Wechsel des Batterie-Austauschmoduls automatisiert bzw. teilautomatisiert ausgeführt werden, wobei einer Steuereinheit, die den Wechsel regelt, die notwenigen Spezifikationen des Fahrzeugs zur Verfügung gestellt werden.

Vorzugsweise ist das Batterie-Austauschmodul in dem ersten Aufnahmeraum horizontal verschieblich gelagert, wobei das Batterie-Austauschmodul in dieser horizontalen Richtung von der Ladevorrichtung entnommen und eingebracht wird. Vorteilhaft kann durch dieses Merkmal auf Hebebühnen zum Austausch von Batteriemodulen verzichtet werden, wie sie im Stand der Technik beschrieben werden. Die Batterie-Austauschmodule können in eine Haltevorrichtung aufgenommen sein, die ein Kugellager entlang der horizontalen Richtung umfasst, sodass selbst ein schweres Batterie-Austauschmodul leichtgängig entlang dieser Richtung verschiebbar ist. Wird das Batterie-Austauschmodul zudem durch eine Feder vorgespannt, kann es beim Öffnen des Aufnahmeraums automatisch ein wenig aus dem Aufnahmeraum herausgleiten und hierdurch noch einfacher von der Ladevorrichtung angenommen werden.

Gemäß eines anderen Aspekts der Erfindung ist eine Verwendung einer Kommunikationsplattform zum Wechseln des Batterie-Austauschmodul eines Fahrzeugs angegeben, wobei das Fahrzeug den Ladezustand des Batterie-Austauschmodul mittels einer drahtlosen Verbindung an die Kommunikationsplattform übermittelt, wobei die Kommunikationsplattform dem Fahrzeug zentrale und/oder dezentrale Wechselstationen für das Batterie-Austauschmodul und/oder das Handbatterie-Modul innerhalb der elektrischen Reichweite des Fahrzeugs anzeigt. Vorteilhaft wird hierdurch erreicht, dass das Fahrzeug bei niedrigem Batteriestand an eine elektrische Tankstelle geleitet wird, wo die Batterien getauscht werden können. Die dezentralen Wechselstationen gewährleisten hierbei die flächendeckende Versorgung mit Batterie-Austauschmodulen bzw. der Handbatterie-Modulen und können beispielsweise dadurch realisiert sein, dass andere Verkehrsteilnehmer ein Handbatterie-Modul in ihrem Kofferraum transportieren oder dass Lastkraftwagen gezielt als mobile Tankstellen/Wechselstation auf den Straßen unterwegs sind.

Bevorzugt leitet die Kommunikationsplattform dezentrale Wechselstationen automatisch in Richtung des Fahrzeugs, vorzugsweise in dem Fall, wenn das Fahrzeug mit seiner eigenen verfügbaren Kilometerreichweite keine andere Wechselstation mehr erreicht. Dadurch wird vorteilhaft gewährleistet, dass selbst ein Fahrzeug mit leeren Batterien nach kurzer Zeit wieder verkehrstauglich ist.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt den schematischen Aufbau des Batterie-Austauschmoduls.
- Fig. 2:: zeigt den ersten Aufnahmeraum in einem Fahrzeug.
- Fig. 3:: zeigt eine Lagerung des Batterie-Austauschmoduls im Fahrzeug.
- Fig. 4:: zeigt eine Schnellladevorrichtung zum Wechsel des Batterie-Austauschmoduls.
- Fig. 5:: zeigt einen weiteren ersten Aufnahmeraum in dem Fahrzeug.
- Fig. 6:: zeigt schematisch eine Stromregelung in dem Fahrzeug.
- Fig. 7:: zeigt eine Kommunikationsplattform zum Wechseln von Autobatterien.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist und unter die unabhängigen Ansprüche fällt.

Ein "schneller Übergang" des Individualverkehrs auf die e-Mobilität ist aufgrund der vorstehend beschriebenen Rahmenbedingungen nur schwer zu realisieren. Kraftfahrzeuge mit Verbrennungsmotoren wird es als Brückentechnologie noch für längere Zeit auf der Straße geben. Diese Kraftfahrzeuge können aber ein elektrisches Versorgungsnetz für die elektronisch betriebenen Fahrzeuge ausbilden, was nachstehend näher beschrieben wird und einen vorteilhaften Aspekt der Erfindung darstellt.

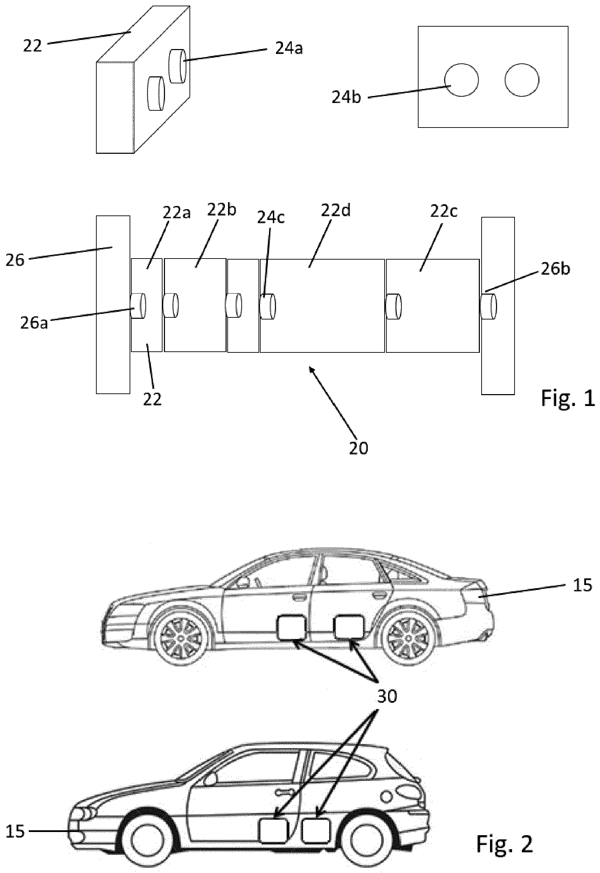

In Fig. 1 ist ein Batterie-Austauschmodul 20 schematisch gezeigt, welches mehrere Batterieelemente 22 umfasst und modular aus diesen aufgebaut ist. Die Batterieelemente 22 werden in verschiedenen Größen verwendet, die jedoch ein Vielfaches einer Einheitsgröße sind, sodass die Batterieelemente 22 flexibel zu einer vorgegebenen Länge kombiniert werden können, welche durch den ersten Aufnahmeraum 30 des Fahrzeugs 15 festgelegt wird. Je nach Fahrzeugtyp können ein weiterer oder noch mehrere Aufnahmeräume vorgesehen sein, um die für das Fahrzeug benötigte Kapazität an Batterieleistung bereitzustellen. Die Batterieelemente 22 sind quaderförmig und weisen auf entgegengesetzten Seiten jeweils einen elektrischen Kontakt in der Art eines Steckers 24a und eine elektrische Kontaktaufnahmen in der Form einer Buchse 24b auf. Der Stecker 24a eines Batterieelements 22 wird in die Buchse 24b eines anderen Batterieelements 22 eingebracht, wodurch eine Steckverbindung 24c ausgebildet wird. Die Steckverbindung 24c ist elektrisch leitend, sodass die Kapazität der Batterieelemente zusammengeschaltet wird, die Batterieelemente 22 sind flexibel elektrisch parallel oder in Reihe geschaltet sind, was mittels einer intelligente elektronische Steuerung 72 geregelt wird. Die Batterieelemente 22 werden nach festen Vorgaben standardisiert angefertigt, sodass diese für eine Vielzahl von Fahrzeugen 15 und Herstellern verwendet werden können. An die beiden Enden des Batterie-Austauschmoduls 20 ist jeweils ein Batterieanschluss-Modul 26 zum Abschluss vorgesehen, wobei das eine Batterieanschluss-Modul 26 einen Stecker 26a und das andere Batterieanschluss-Modul 26b eine Buchse 26b zur leitenden Verbindung mit dem Batterie-Austauschmodul 20 aufweist, sodass eine Verbindung zum internen Stromnetz des Fahrzeugs 15 geschaffen wird.

Nachfolgend ist eine mögliche Modularisierung einer Autobatterie am Beispiel eines zukünftigen Mittelklassewagens beschrieben. Das Gesamtgewicht der Batterie beträgt 250 kg, was bei einer Kapazität von 75 kWh eine Reichweite von 600 km ergibt. Die genaue Dimensionierung sollte über alle Fahrzeuggattungen, -klassen und -hersteller standardisiert werden und flexibel auf das jeweilige Fahrzeug angepasst sein, was durch die erfindungsgemäße Modularisierung des Batterie-Austauschmoduls 20 möglich ist.

Fig. 1 zeigt, dass für den Mittelklassewagen beispielhaft fünf Batterieelemente 22 in vier verschiedenen Größen 22a, b, c, d zu einer "großen Batterie" zusammengesteckt sind. Insgesamt entspricht in diesem Beispiel die Kapazität des Batterie-Austauschmoduls 20 11-mal der Kapazität der Einheitsgröße des Batterieelements 22. Die Batterien werden von den Fahrern der Fahrzeuge nicht gekauft, sondern sind Mietobjekte (ähnlich wie bei Gasflaschen) und können deshalb unproblematisch zwischen verschiedenen Fahrzeugen 15 getauscht werden. Bei einem Oberklassewagen, der einen höheren Energiebedarf als der Mittelklassewagen hat, können mehr Batterieelemente 22 zusammengesteckt werden als bei den Mittelklassewagen, sodass sich zum Beispiel eine Gesamtkapazität ergibt, die 20-mal der Kapazität der Einheitsgröße des Batterieelements 22 entspricht. Um die elektrische Reichweite des Fahrzeugs 15 weiter zu erhöhen können, wie in Fig. 2 gezeigt, auch mehrere erste Aufnahmeräume 30 für das Batterie-Austauschmodul 20 vorgesehen sein. Der erste Aufnahmeraum 30 ist für Batterien vorgesehen, die dem Typ des Batterie-Austauschmoduls 20 entsprechen. Nachfolgend werden weitere Aufnahmeräume für andere Typen von Batterien bzw. Modulen beschrieben.

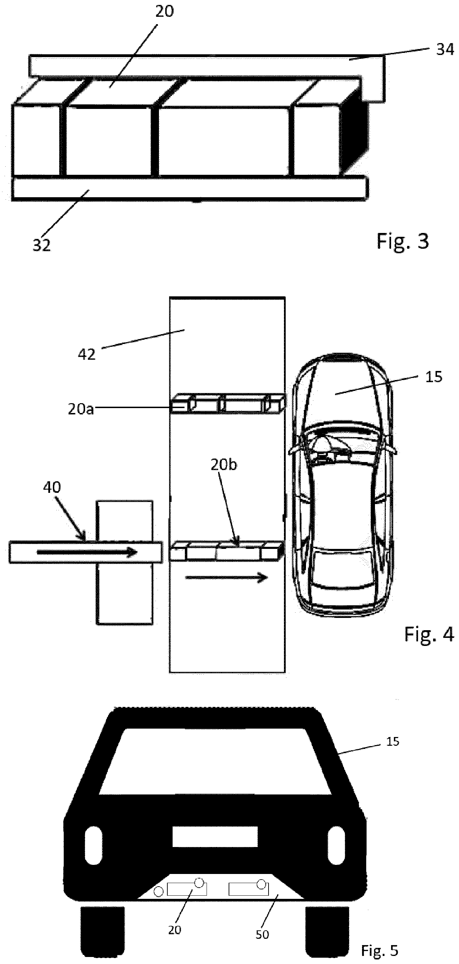

Ein wichtiges Kriterium für die Elektromobilität ist, dass die Batterien des Fahrzeugs, insbesondere das Batterie-Austauschmodule 20, ähnlich schnell ausgewechselt werden können, wie das heutige Betanken mit fossilen Brennstoffen dauert, da es ansonsten an den Tankstellen zu Rückstau kommen kann. Hierzu ist es zunächst vorteilhaft, wie Fig. 3 gezeigt, das Batterie-Austauschmodul 20 in einer Weise in dem ersten Aufnahmeraum 30 zu lagern, die ein leichtes Einbringen und Entfernen des Batterie-Austauschmoduls 20 aus dem ersten Aufnahmeraum 30 ermöglicht. Besonders zweckmäßig ist es hierbei, wenn auch der erste Aufnahmeraum 30 standardisierte Abmessungen aufweist. Das Batterie-Austauschmodul 20 ist in horizontaler Richtung auf einem Kugellager 32 gelagert, was ein leichtes Austauschen von selbst schweren Batterie-Austauschmodulen 20 in horizontaler Richtung ermöglicht. Zusätzlich ist ein Federsystem 34 vorgesehen, welches beim Einbringen des Batterie-Austauschmoduls 20 in den ersten Aufnahmeraum 30 vorgespannt wird und beim Wechselvorgang das Batterie-Austauschmodul 20 in Richtung der Öffnung des Aufnahmeraums 30 kraftbeaufschlagt.

Für den Wechsel des Batterie-Austauschmoduls 20 wird, siehe Fig. 4, eine Ladevorrichtung 40 verwendet. Diese sollte wiederum standardisiert sein. An der Seite oder am Boden des Fahrzeugs 15 ist eine Verriegelung, die für den Batterieaustausch geöffnet wird. Eine Klappe kann nach Öffnung der Verriegelung geöffnet werden und das Batterie-Austauschmodul 20 herausgenommen werden. Die Lage des Batterie-Austauschmoduls 20 soll eine gute Gewichtsverteilung sowie ein leichtes Austauschen ermöglichen.

Die Ladevorrichtung 40 entnimmt dem ersten Aufnahmeraum 30 ein entladenes Batterie-Austauschmodul 20a und legt dieses zum Abtransport auf einem Förderband 42 ab. Auf dem Förderband 42 wird zudem ein geladenes Batterie-Austauschmodul 20b zur Öffnung des ersten Aufnahmeraums 30 befördert und mittels der Ladevorrichtung 40 in den ersten Aufnahmeraum 30 eingebracht. Die Anzahl der geladenen Batterieelemente 22 wird vorab konfiguriert. Die Klappe des ersten Aufnahmeraums 30 wird geschlossen und verriegelt und das Fahrzeug 15 kann mit aufgeladenen Batterien die Fahrt vorsetzen. Dieser Vorgang dauert nur wenige Minuten und ist von der Zeitdauer mit einem konventionellen Tankvorgang fossiler Brennstoffe vergleichbar. Es ist also keine Schnellladung der Autobatterien mehr notwendig, die die Infrastruktur des Stromnetzes vor Probleme stellen könnte. Die Batterien, also die Batterieelemente, können an der elektrischen Tankstelle beispielsweise über Nacht geladen oder auch angeliefert werden, wobei ein Laden der leeren Autobatterien an der elektrischen Tankstelle aufgrund der entfallenen Transportwege ökonomischer ist. Wie in Fig. 4 zu sehen ist, muss das Fahrzeug 15 nicht auf eine andere Höhe angehoben werden, um das Batterieaustauschmodul 20 zu wechseln. Der Fahrer kann das Fahrzeug 15 einfach an die Ladevorrichtung 40 heranfahren und der Wechsel kann sofort beginnen.

Ähnlich wie bei den heutigen Benzinpreisen, kann die Kapazität der verfügbaren Batterien der elektrischen Tankstelle sichtbar angezeigt werden, sodass die Fahrzeuge 15 keine E-Tankstelle anfahren, die keine aufgeladenen Batterien mehr auf Lager hat.

Das Fahrzeug 15 kann beispielsweise 50 % des Gesamtbatteriegewichts (125 kg, 37,5 kWh, 300 km Reichweite) in einer festverbauten Form, beispielsweise im Fußboden, aufweisen, sodass sich die Gesamtkapazität des Fahrzeugs 15 aus der Summe von wechselbaren und nicht-austauschbaren Batterien ergibt. Eine Kombination von fest eingebauten und wechselbaren Batterien ist unter Umständen dann sinnvoll, wenn insbesondere der Platz für den ersten Aufnahmeraum 30 begrenzt ist. Im Gegensatz zu dem Raum für die fest eingebauten Batterien, muss dieser nämlich zudem die Randbedingung einer leichten Zugänglichkeit erfüllen.

Auswechselbare Batterieelemente 22 bei elektrischen Fahrzeugen haben generell den Vorteil, dass neu entwickelte Batterieelemente 22 mit besseren Eigenschaften, leicht in das elektrische Fahrzeug eingebracht werden können, indem man diese einfach gegen die alten Batterien austauscht. In dem beispielhaften Fahrzeug können die weiteren 50 % des Batteriegewichts wechselbar als Batterieelemente 22 in Aufnahmeräumen vorgesehen sein:
- Zwei große Batterie-Austauschmodule 20 mit jeweils ca. 40 kg (jeweils 40x 30x 12 cm, jeweils 100 km Reichweite)
- Zwei Handbatterie-Module mit jeweils ca. 20 kg (jeweils 30x 20x 12 cm, jeweils 50 km Reichweite)

Die Handbatterie-Module werden im Kofferraum auf Höhe der Hinterachse platziert und sind mit einem Griff versehen, sodass sie manuell ohne weitere Hilfsmittel in einfache Weise in ein für sie vorgesehenen zweiten Aufnahmeraum eingebracht werden können. Dies ermöglicht bei Verfügbarkeit einen Wechsel der Handbatterie-Module zu jeder Zeit und an jedem Ort.

Die Batterie-Austauschmodule 20 können wie in Fig. 4 gezeigt, seitlich in das Fahrzeug 15 eingebracht werden oder aber, siehe Fig. 5, durch einen entsprechenden Einschub 50 im Heck, welcher unterhalb der Stoßstange platziert ist. Aufgrund des Gewichts und der Platzierung der Batterie-Austauschmodule 20 wird zum Wechsel ein Hilfsmittel benötigt (z.B. ein kleiner Hubwagen). Der Wechsel der schweren Batterie-Austauschmodule 20 wird in der Regel an zentralen Wechselstationen 82 (z.B. heutige Tankstellen) oder dezentralen Wechselstationen 84 stattfinden, an denen die Hilfsmittel zum Wechsel bereit stehen.

Der Wechsel der Batterie-Austauschmodule 20 sollte jeweils innerhalb von einer Minute machbar sein. Vorzugsweise sind die Batterie-Austauschmodule 20 robust konstruiert und können gegebenenfalls eine Schutzhülle aufweisen, wobei die Schutzhülle entsprechend konstruiert ist, dass diese die Stecker 24a und Buchsen 24b ausbildet. Die verschiedenen Batterien im elektrischen Auto sind in der Regel voll bestückt, wobei mindestens eines der Handbatterie-Module immer mitgeführt werden muss, um ein flächendeckendes Netz an Handbatterie-Modulen aufzuspannen. Im Einzelfall kann es jedoch sinnvoll sein, elektrische Autos nur mit einer reduzierten Bestückung der Batterien auszustatten. Dies kann beispielsweise im Stadtbetrieb sinnvoll sein, um Gewicht und Energie einzusparen. Hierzu kann dann einer der Aufnahmeräume leer bleiben. Im Normalfall muss ein Batterieschacht allerdings immer mit der vollen Anzahl an Batterieelementen befüllt sein, da sonst der elektrische Kontakt nicht hergestellt ist. Alternativ kann der Batterieschacht mittels eines Federsystems eine variable Größe aufweisen, sodass eine reduzierte Anzahl an Batterieelementen mitgeführt werden kann. Durch das Federsystem wird trotz nicht voll bestücktem Batterieschacht der elektrische Kontakt hergestellt und das Fahrzeug 15 ist fahrbereit.

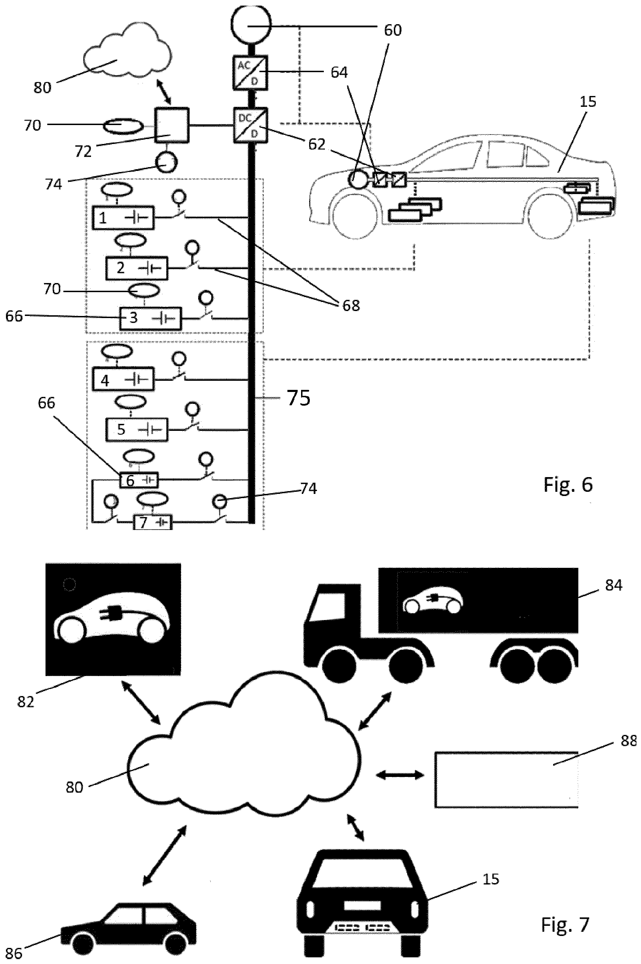

Die Entladung der verschiedenen Batterieelemente 22 des Batterie-Austauschmoduls 20 und des Handbatterie-Moduls sind, wie in Fig. 6 gezeigt, während des Fahrbetriebs intelligent und selektiv steuerbar. Es kann also gezielt festgelegt werden, welche Batterien bzw. Batterieelemente 22 entladen werden, bevorzugt die, welche zum nächsten Wechsel anstehen. Da elektrische Motoren im Hochvoltbereich betrieben werden, müssen gegebenenfalls Spannungsunterschiede zu den wechselbaren Batterien elektronisch ausgeregelt werden. Dies kann durch Gleichspannungswandler, variable Verschaltung der Batterien untereinander oder andere Techniken gelöst werden.

Fig. 6 beschreibt eine besonders effiziente Variante in welcher die flexible variable Verschaltung von Parallelschaltung und Reihenschaltung der Batterieelemente zu erkennen ist: Das elektrische Fahrzeug 15 wird von einem Umrichter geführten 3-Phasen Synchronmotor 60 angetrieben. Ein Hochvolt DC-DC-Wandler 62 und ein 3-Phasen Wechselrichter 64 sind bidirektional für den Fahrbetrieb und Ladevorgang bzw. die Rekuperation ausgelegt. Die geregelte Traktionsspannung beträgt ca. 320 V. Fünf Batteriemodule 66 sind jeweils mit 88 Li-lonen-Zellen bestückt. Die Batteriemodule 66 weisen zusätzlich zu den Batterieelementen 22 noch Sensoren und Schalter auf. Das sechste und siebte Batteriemodul 66 sind als Handbatterie-Module vorgesehen und jeweils mit 44 Zellen bestückt. Bei voller Akku-Bestückung "kann" das e-Fahrzeug 15 mit sechs parallelen 320V-Akku-Zweigen 68 betrieben werden. Über sieben Sensoren 70 erkennt die intelligente Steuerung 72 die jeweilige Bestückung und den Ladezustand der Batteriemodule. Über die elektronischen Hochleistungsschalter S1 -8 74 können die Batteriemodule 66 je nach Bedarf zugeschaltet werden. Dies ermöglicht auch, dass einzelne Batteriemodule 66 vollständig leer gefahren werden können, bevor die intelligente Steuerung 72 andere Batteriemodule 66 hinzu schaltet. Die Batteriemodule 66 mit den Nummern 6 und 7 entsprechen den Handbatterie-Modulen - da diese jeweils keine Spannung von 320 Volt bereitstellen können, werden sie durch die intelligente Steuerung 72 zunächst in Reihe geschaltet und dann gewissermaßen als Gruppe parallel zu den übrigen Batteriemodulen 66 hinzugeschaltet. Die intelligente Steuerung 72 übernimmt das Management der Verschaltung und Entladung der jeweiligen Batteriemodule 66. Damit können beispielsweise vor dem Wechsel der Batteriemodule 66 4-7, diese gezielt entladen werden, ohne die Reserven der fest verbauten Batteriemodule 66 1-3 zu entladen. Auf der geplanten Fahrtstrecke wird das Management des Akkutausches zwischen der Steuerung 72 und einer Kommunikationsplattform 80 zum Wechseln von Batterieaustauschmodulen 66 intelligent organisiert.

Als weitere Ausführungsvariante sind, anstatt des Fig. 6 zentralen Hochvolt DC-DC-Wandlers 62, einzelne dezentrale Hochvolt DC-DC-Wandler in jedem der Akku-Zweige möglich. Damit könnten unterschiedliche Akku-Spannungen oder Akkubestückungen in den jeweiligen Zweigen miteinander zu einem einheitlichen geregelten Hochvolt-DC-Bus 75 kombiniert werden.

Dieses Konzept der Standardwechselmodule kann im Hinblick auf die äußerliche Form gleichbleiben, aber trotzdem neue technologische Entwicklungen berücksichtigen: Verdoppelt sich die Kapazität der Batterien durch einen Technologiesprung, so kann das Standardwechselmodul äußerlich, insbesondere also die Schutzhülle, immer noch die gleiche standardisierte Form aufweisen, das innere Batteriemodul bzw. Batterieelement aber fortschrittlicher sein. Dadurch kann ein Technologiesprung des e-Fahrzeugs 15 durch einen einfachen Modulwechsel erreicht werden. Technologiesprünge sind in diesem im Bereich in den kommenden Jahren sehr wahrscheinlich, da ein massiver Forschungsaufwand betrieben wird.

Zur Sicherstellung einer flächendeckenden Versorgung der Fahrzeuge 15 mit elektrischer Energie kann jedes KFZ mit einem Verbrennungsmotor (KFZ-V) ein Handbatterie-Modul mitführen. Dieses Handbatterie-Modul (circa 20 kg) sollte in einer Wechselvorrichtung leicht zugänglich platziert sein (z.B. wie beim e-Auto im Kofferraum). Während des Fahrbetriebes wird neben der gewöhnlichen Starterbatterie des KFZ-V auch das Handbatterie-Modul durch eine mitgeführte Ladevorrichtung geladen. Das Handbatterie-Modul kann für das KFZ-V als Backup (Absicherung) für die Starterbatterie genutzt werden, wodurch die Starterbatterie auch kleiner dimensioniert werden kann. Bei Plug-In-Hybrid-Fahrzeugen 15 wird das Handbatterie-Modul ebenfalls zu Steigerung der Betriebssicherheit eingesetzt, wodurch die Standardkomponenten auch etwas leichter/billiger dimensioniert werden können.

Das Handbatterie-Modul wird in den KFZ-V ein zusätzliches Gewicht (ca. 20-25 kg) und Zusatzkosten (ca.100-200€) verursachen. Dies kann zukünftig allerdings als Zulassungsvoraussetzung für den weiteren Betrieb eines KFZ-V sein. Der Halter des KFZ-V muss im Bedarfsfall sein geladenes Handbatterie-Modul einem e-Fahrzeug 15 zum Wechsel zur Verfügung stellen (an jedem Ort und zu jeder Zeit). Die Organisation dieses Batterietausches übernimmt die Kommunikationsplattform 80. Nach dem Tausch des Handbatterie-Moduls wird das entladene Handbatterie-Modul im KFZ-V beim Fahrbetrieb wieder aufgeladen. Dadurch werden die KFZ-V zum aktiven Wegbereiter der e-Mobilität, da diese die Energieverfügbarkeit für e-Fahrzeuge 15 in jeder Situation sichern und jedes e-Auto 15 durch die Handbatterie-Module im Bedarfsfall mit 50 km zusätzlicher Reichweite versehen werden kann.

Fig. 7 illustriert eine Kommunikationsplattform 80, die den Wechsel der Batteriemodule 66 regelt:
Über eine Maschine-zu-Maschine-Verbindung sind alle Fahrzeuge 15 mit der Kommunikationsplattform 80 mittels eines Kommunikationskanals, insbesondere über das Internet, drahtlos verbunden. Das Fahrzeug 15 sendet neben seinen Identifikationsdaten und der Position auch seine Batteriekonfiguration und den entsprechenden Ladestand. Die Kommunikationsplattform 80 ist mit zentralen Wechselstationen 82 und dezentralen Wechselstationen 84 vernetzt und hat Kenntnis über deren Verfügbarkeit bezüglich der Batterieelemente 22 und der entsprechenden Wartezeiten beim elektrischen Tanken. Die Kommunikationsplattform 80 stellt dem elektronischen Fahrzeug 15 Informationen für einen möglichen Wechsel des Batterie-Austauschmoduls 20 zur Verfügung und regelt im Bedarfsfall den Austausch. Die Kommunikationsplattform 80 kann folgende Funktionalitäten umfassen:
- Dem Fahrzeug 15 werden Vorschläge bzw. die Navigation zur günstigsten bzw. zeitsparenden Wechselstelle in Abhängigkeit zur vorgesehenen Strecke und dem aktuellen Akkustand angezeigt. Hierbei kann es sich um eine zentrale Wechselstation 82, eine dezentrale Wechselstation 84 oder ein KFZ-V 86 handeln.
- Es ist eine Reservierungsmöglichkeit im Hinblick auf den Wechsel der Batteriemodule 66 gegeben.
- Die Kommunikationsplattform 80 übernimmt den Datenaustausch zwischen dem elektrischen Fahrzeug 15 und dem ausgewählten KFZ-V 86 zum Austausch der Batterie-Austauschmodule 20.
- Die Kommunikationsplattform 80 übernimmt gegenüber den Ordnungsbehörden auch Dokumentation der Wechselbereitschaft des Fahrers des KFZ-V 86. Dieser ist verpflichtet sein Hand Batterie-Modul mitzuführen und im Bedarfsfall sein volles Hand Batterie-Modul gegen ein entsprechend leeres Hand Batterie-Modul eines elektrischen Fahrzeugs 15 zu tauschen. Kommt der Fahrer des KFZ-V 86 dieser Verpflichtung nicht nach, kann durch die Ordnungsbehörden eine Geldbuße verhängt werden.
- Die Kommunikationsplattform 80 übernimmt im Notfall für das elektrische Auto 15 die Kommunikation mit einem Pannendienst, der gegebenenfalls ebenfalls Batteriemodule 66 und/oder Batterieelemente 22 mit sich führt.
- Die Kommunikationsplattform 80 bietet zudem Informationen zur Verfügbarkeit von elektrischen Ladestationen und der zugehörigen Wartezeit.

Die Betreiber 88 bzw. Hersteller 88 der Batteriemodule 66 sind für die Qualitätsstandards der Batterien verantwortlich. Hierbei sei an dieser Stelle noch einmal klargestellt, dass der Begriff der Batteriemodule 66 als Oberbegriff für die Handbatterie-Module als auch für das Batterie-Austauschmodul 20 anzusehen ist. Erfüllt ein Batteriemodul 66 nicht mehr den technisch geforderten Standard, dann wird das im Kreislauf befindliche Batteriemodul 66 ersetzt. Bei einem der verschiedenen vorstellbaren Geschäftsmodelle, sind die Betreiber 88 auch die Besitzer der Batteriemodule 66 und die Nutzer entrichten ein dementsprechendes Nutzungsentgelt.

An den zentralen Wechselstationen 82 stehen die Batteriemodule 66 zum zeitnahen Austausch zur Verfügung. Dies können insbesondere die heutigen Tankstellen sein. Da die entladenen Batteriemodule 66 wieder geladen werden müssen, gibt es hierfür die folgenden Varianten:
- die Ladeinfrastruktur, inklusive der dafür notwendigen Netzanbindung, ist vorhanden, sodass die entladenen Batteriemodule vor Ort an der zentralen Wechselstation 82 aufgeladen werden können.
- Die entladenen Batteriemodule 66 werden per Lkw an Ladestandorte mit der entsprechenden Infrastruktur gebracht, aufgeladen und wieder zurück in den Kreislauf integriert.
- In der Nähe der Ladestation können erneuerbare Energieerzeuger platziert werden. Außerdem können Power-to-Gas und Gas-to-Power Systeme genutzt werden, um die Ladekapazität zu erhöhen.

Als dezentrale Wechselstation 84 kann beispielsweise ein Lkw fungieren. Ein Lkw mit einer Ladekapazität von 40 Tonnen kann ca. 1000 Batterie-Austauschmodule 20 laden, was einer Kapazität von ca. 12 MWh und damit eine Reichweite von ca. 100.000 km für elektrische Fahrzeuge 15 entspricht. Die heutige Treibstofflogistik (Benzin/Diesel) bei der der Lkw herkömmliche Tankstellen versorgt, bringt es pro Lkw-Ladung auf eine Reichweite von ca. 400.000 km für die KFZ-V. Zwar sind Batterien bei falscher oder mutwilliger Handhabung nicht ungefährlich, jedoch im Vergleich zu dem Gefahrengut Benzin deutlich sicherer zu handhaben, sodass eine dezentrale Wechselstation 84 ermöglicht wird. Insbesondere die Handbatterie-Module können dezentral an beliebigen Stellen der Verkehrsinfrastruktur eingesetzt werden. Insbesondere können an den Fahrbahnränder Solaranlagen mit einer Ladevorrichtung für die Handbatterie-Module vorgesehen sein. Durch die Vernetzung mit der Kommunikationsplattform 80 sind die elektrischen Fahrzeuge 15 immer online und darüber informiert, an welcher Stelle entlang des vorhergesehen Weges Batteriemodule 66 zur Verfügung stehen.

Die Erfindung ermöglicht es also eine flächendeckende, einfache und flexible Versorgung mit Batteriemodulen 66 zu schaffen, die aufgrund der Standardisierung und Modularisierung der Batteriemodule 66 für eine Vielzahl unterschiedlicher Fahrzeuge 15 Anwendung finden kann.

## Patentansprüche

1. Batteriesystem zum Betreiben eines elektrischen Motors von Fahrzeugen (15), insbesondere von PKWs und/oder LKWs, umfassend
zumindest ein Batterie-Austauschmodul (20), wobei das Batterie-Austauschmodul (20) mehrere Batterieelemente (22) umfasst und modular aus diesen aufgebaut ist,
wobei die Batterieelemente (22) elektrisch zu dem Batterie-Austauschmodul (20) gekoppelt sind;
wobei die Batterieelemente (22) jeweils eine Einheitsgröße oder ein Vielfaches der Einheitsgröße aufweisen und flexibel zu einer vorgegebenen Länge kombinierbar sind, wobei das Batterie-Austauschmodul (20) in einen ersten Aufnahmeraum des fahrzeugs einbringbar ist, wobei das Batterie-Austauschmodul eingerichtet ist, den elektrischen Motor mit Strom zu versorgen,
wobei jedes der Batterieelemente (22) einen elektrischen Kontakt und eine elektrische Kontaktaufnahme mit jeweils einer ersten und einer zweiten Stromleitung aufweist,
wobei die Batterieelemente (22) mechanisch an ihren jeweiligen Stirnflächen gegeneinander anliegen und eine Steckverbindung ausbilden,
dass der elektrische Kontakt eines ersten Batterieelements (22) in die elektrische Kontaktaufnahme eines zweiten Batterieelements (22) eingebracht ist, wobei das erste und das zweite Batterieelement (22) zumindest abschnittsweise die Steckverbindung ausbilden,
und dass die mechanisch gekoppelten Batterieelemente (22) in Reihe oder parallel geschaltet sind,
**dadurch gekennzeichnet,**
**dass** die jeweiligen ersten Stromleitungen und die jeweiligen zweiten Stromleitungen der Batterieelemente (22) elektrisch miteinander verbunden sind,
wobei die Batterieelemente entsprechende Schaltungen aufweisen, sodass die Batterieelemente durch eine intelligente Z Steuerung des Fahrzeugs wahlweise parallel oder in Reihe schaltbar sind und entweder eine elektrische Parallelschaltung oder eine Reheinschaltung ausbilden.

2. Batteriesystem nach einem der vorherigen Ansprüchen, **dadurch gekennzeichnet, dass** die Steckverbindung (24c) durch einen mechanischen Druck zusammengehalten wird.

3. Batteriesystem nach einem der vorherigen Ansprüchen, **dadurch gekennzeichnet, dass** die Batterieelemente (22) jeweils mit einer Schutzhülle umgeben sind, und dass ein Stecker (24a) und eine Buchse (24b) an dieser Schutzhülle vorgesehen sind und eine leitende Verbindung zu dem Batterieelement (22) im Inneren der Schutzhülle herstellen.

4. Batteriesystem nach einem der vorherigen Ansprüchen, **dadurch gekennzeichnet, dass** die Batterieelemente (22) jeweils die geometrische Form eines Quaders aufweisen und dass ein Stecker (24a) und eine Buchse (24b) auf gegenüberliegenden Seiten des Quaders vorgesehen ist.

5. Verfahren zum Schnellwechsel eines Batterie-Austauschmoduls mit einem Batteriesystem nach einem der Ansprüche 1 bis 4,
wobei ein geladenes Batterie-Austauschmodul (20), das modular zumindest zwei Batterieelemente (22) aufweist, die mittels einer Steckverbindung (24c) verbunden sind, zum Wechsel bereitgehalten wird,
wobei eine Ladevorrichtung (40) dem ersten Aufnahmeraum (30) zunächst ein entladenes Batterie-Austauschmodul (22) entnimmt und danach das geladene Batterie-Austauschmodul (22) einbringt,
**dadurch gekennzeichnet,**
**dass** an der Öffnung des ersten Aufnahmeraums (30) ein Förderband (42) vorgesehen ist auf dem das entladene Batterie-Austauschmodul (20) abtransportiert und das geladene Batterie-Austauschmodul (20) angeliefert wird.

6. Verfahren nach Anspruch 5, **dadurch gekennzeichnet, dass** das Batterie-Austauschmodul (20) in dem ersten Aufnahmeraum (30) horizontal verschieblich gelagert ist und von der Ladevorrichtung (40) in dieser horizontalen Richtung entnommen und eingebracht wird.

7. Verwendung einer Kommunikationsplattform zum Wechseln eines Batterie-Austauschmoduls wie in den Ansprüche 1 bis 4 definiert,
wobei das Fahrzeug (15) den Ladezustand des Batterie-Austauschmoduls (20) mittels einer drahtlosen Verbindung an die Kommunikationsplattform (80) übermittelt,
**dadurch gekennzeichnet,**
**dass** die Kommunikationsplattform (80) dem Fahrzeug (15) dezentrale Wechselstationen (82, 84, 86) innerhalb der elektrischen Reichweite des Fahrzeugs (15) anzeigt und den Wechsel organisiert und dass die Kommunikationsplattform (80) die dezentrale Wechselstationen (84, 86) in Richtung des Fahrzeugs (15) leitet,
wobei als dezentrale Wechselstationen ein LKW verwendet wird.

## Claims

1. Battery system for operating an electric motor of vehicles (15), in particular of cars and / or trucks, comprising
at least one battery exchange module (20), wherein the battery exchange module (20) comprises a plurality of battery elements (22) and is constructed in modular manner therefrom,
wherein the battery elements (22) are electrically coupled to the battery exchange module (20);
wherein the battery elements (22) each have a unit size or a multiple of the unit size and can be combined flexibly to attain a predetermined length, wherein the battery exchange module (20) can be introduced into a first accommodation space of the vehicle, wherein the battery exchange module is designed to supply the electric motor with electrical current,
wherein each of the battery elements (22) has an electrical contact and an electrical contacting means with each of a first and a second power line,
wherein the battery elements (22) mechanically abut each other at their respective end faces and form a plug connection,
that the electrical contact of a first battery element (22) is introduced into the electrical contacting means of a second battery element (22), wherein the first and the second battery elements (22) form at least a section of the plug connection,
and that the mechanically coupled battery elements (22) are connected in series or in parallel
**characterized in that**
the respective first power lines and the respective second power lines of the battery elements (22) are connected to each other electrically,
wherein the battery elements have corresponding circuits, so that the battery elements can be switched optionally in parallel or in series by an intelligent controller of the vehicle, and form either an electrical parallel circuit or a serial circuit.

2. Battery system according to one of the preceding claims, **characterized in that** the plug connection (24c) is held together by a mechanical pressure.

3. Battery system according to one of the preceding claims, **characterized in that** the battery elements (22) are each surrounded with a protective cover, and that a plug (24a) and a socket (24b) are provided on this protective cover and establish a conductive connection to the battery element (22) inside the protective cover.

4. Battery system according to one of the preceding claims, **characterized in that** the battery elements (22) each have the geometric shape of a cuboid, and that a plug (24a) and a socket (24b) are provided on opposite sides of the cuboid.

5. Method for the fast exchange of a battery exchange module with a battery system according to one of claims 1 to 4,
wherein a charged battery exchange module (20) having at least two modularly combined battery elements (22) that are connected via a plug connection (24c), is kept in readiness for the exchange,
wherein a charging device (40) first removes a discharged battery exchange module (22) from the first accommodation space (30) and then introduces the charged battery exchange module (22),
**characterized in that**
a conveyor belt (42) is provided at the opening of the first accommodation space (30), on which the discharged battery exchange module (20) is transported away, and the charged battery exchange module (20) is delivered.

6. Method according to Claim 5, **characterized in that** the battery exchange module (20) is mounted so as to be horizontally displaceable in the first accommodation space (30), and is removed from and introduced in said horizontal direction by the charging device (40).

7. Use of a communication platform for replacing a battery exchange module as defined in Claims 1 to 4,
wherein the vehicle (15) transmits the state of charge of the battery exchange module (20) to the communication platform (80) via a wireless connection,
**characterized in that**
the communication platform (80) displays decentralised exchange stations (82, 84, 86) within the electrical range of the vehicle (15) to the vehicle (15), and organises the exchange, and that the communication platform (80) guides the decentralised exchange stations (84, 86) in the direction of the vehicle (15), wherein a truck is used as decentralised exchange stations.

## Revendications

1. Système de batterie pour faire fonctionner un moteur électrique de véhicules (15), notamment des véhicules particuliers et/ou camions, comprenant
au moins un module de remplacement de batterie (20), dans lequel le module de remplacement de batterie (20) comprend plusieurs éléments de batterie (22) et est constitué modulairement de ceux-ci,
dans lequel les éléments de batterie (22) sont couplés électriquement au module de remplacement de batterie (20),
dans lequel les éléments de batterie (22) présentent respectivement une taille universelle ou un multiple de la taille universelle et peuvent être combinés avec flexibilité en une longueur prescrite, dans lequel le module de remplacement de batterie (20) peut être placé dans un premier espace de réceptacle du véhicule, dans lequel le module de remplacement de batterie est configuré pour alimenter le moteur électrique en courant,
dans lequel chacun des éléments de batterie (22) présente un contact électrique et une prise de contact électrique avec respectivement une première et une deuxième ligne électrique,
dans lequel les éléments de batterie (22) viennent reposer l'un contre l'autre mécaniquement sur leurs surfaces frontales respectives et forment une connexion enfichable,
en ce que le contact électrique d'un premier élément de batterie (22) est ménagé dans la prise de contact électrique d'un premier élément de batterie (22), dans lequel le premier et le deuxième élément de batterie (22) forment au moins par sections la connexion enfichable,
et que les éléments de batterie couplés en parallèle (22) sont branchés en série ou en parallèle,
**caractérisé en ce que**
les premières lignes électriques respectives et les deuxièmes lignes électriques respectives des éléments de batterie (22) sont électriquement connectées les unes aux autres,
dans lequel les éléments de batterie présentent des circuits correspondants, de sorte que les éléments de batterie puissent être branchés au choix en parallèle ou en série via une unité de commande intelligente du véhicule et constituent soit un circuit électrique en parallèle, soit un circuit en série.

2. Système de batterie selon une des revendications précédentes, **caractérisé en ce que** la connexion enfichable (24c) est solidarisée par une pression mécanique.

3. Système de batterie selon une des revendications précédentes, **caractérisé en ce que** les éléments de batterie (22) sont respectivement entourés par une enveloppe de protection et qu'une fiche (24a) et une douille (24b) sont prévus sur cette enveloppe de protection et établissent une connexion conductrice vers l'élément de batterie (22) à l'intérieur de l'enveloppe de protection.

4. Système de batterie selon une des revendications précédentes, **caractérisé en ce que** les éléments de batterie (22) présentent respectivement la forme géométrique d'un parallélépipède et qu'une prise (24a) et une douille (24b) est prévu sur les côtés opposés du parallélépipède.

5. Procédé de changement rapide d'un module de remplacement de batterie comportant un système de batterie selon une des revendications 1 à 4,
dans lequel un module de remplacement de batterie (20) chargé, qui présente au moins deux éléments de batterie (22) modulaires, qui sont connectés au moyen d'une connexion enfichable (24c), est mis à disposition pour le changement,
dans lequel un dispositif de charge (40) prélève d'abord dans l'espace de réceptacle (30) un module de remplacement de batterie déchargé (22) et apporte ensuite le module de remplacement de batterie chargé (22),
**caractérisé en ce que**
sur l'ouverture du premier espace de réceptacle (30) un convoyeur (42) est prévu sur lequel le module de remplacement de batterie déchargé (20) est évacué et le module de remplacement de batterie chargé (20) est délivré.

6. Procédé selon la revendication 5, **caractérisé en ce que** le module de remplacement de batterie (20) est positionné de manière déplaçable horizontalement dans le premier espace de réceptacle (30) et est prélevé du dispositif de charge (40) dans cette direction horizontale et apporté.

7. Utilisation d'une plateforme de communication pour changer un module de remplacement de batterie dans les revendications 1 à 4,
dans laquelle le véhicule (15) transmet l'état de charge du module de remplacement de batterie (20) au moyen d'une connexion sans fil à la plateforme de communication (80),
**caractérisé en ce que**
la plateforme de communication (80) affiche au véhicule (15) des stations de changement décentralisées (82, 84, 86) à l'intérieur de la portée électrique du véhicule (15) et organise le changement et **en ce que** la plateforme de communication (80) guide les stations de changement décentralisées (84, 86) dans la direction du véhicule (15), dans lequel un camion est utilisé comme station de changement décentralisée.
